(19) Europäisches Patentamt

European Patent Office

Office européen des brevets

(11) **EP 1 064 065 B2**

(12) **NOUVEAU FASCICULE DE BREVET EUROPEEN**

(45) Date de publication et mention de la décision concernant l'opposition:
**16.08.2006 Bulletin 2006/33**

(45) Mention de la délivrance du brevet:
**27.08.2003 Bulletin 2003/35**

(21) Numéro de dépôt: **98914948.9**

(22) Date de dépôt: **19.03.1998**

(51) Int Cl.:
**B01D 15/02** (2006.01) **C07B 57/00** (2006.01)

(86) Numéro de dépôt international:
**PCT/FR1998/000550**

(87) Numéro de publication internationale:
**WO 1999/047228 (23.09.1999 Gazette 1999/38)**

(54) **PERFECTIONNEMENT AU PROCEDE D'ENRICHISSEMENT D'ISOMERES OPTIQUES PAR LIT MOBILE SIMULE**

VERFAHREN ZUR ANREICHERUNG OPTISCHER ISOMERE IN EINEM SIMULIERTEN WANDERBETT

IMPROVED METHOD FOR ENRICHING OPTICAL ISOMERS BY MEANS OF SIMULATED MOBILE BED

(84) Etats contractants désignés:
**BE CH DE DK FR IE IT LI NL**

(43) Date de publication de la demande:
**03.01.2001 Bulletin 2001/01**

(73) Titulaire: **Novasep S.A.**
**54502 Vandoeuvre-lès-Nancy (FR)**

(72) Inventeurs:
 • **NICOUD, Roger-Marc**
 **F-54630 Richardmenil (FR)**
 • **CHARTON, Frédéric**
 **4, rue R. Guibert,**
 **F-68700 Cernay (FR)**
 • **BLEHAUT, Jean**
 **F-54000 Nancy (FR)**

(74) Mandataire: **Hirsch & Associés**
 **58, avenue Marceau**
 **75008 Paris (FR)**

(56) Documents cités:
 **EP-A- 0 471 082      WO-A-91/08815**
 **US-A- 4 498 991**

 • **Pais et al., Journal of Chromatography A., 769 (1997)25-35**
 • **Lim et al., Journal of Chromatography A., 734 (1996)247-258**
 • **Francotte et al., Journal of Chromatography A., 769 (1997)101-107**

Remarques:
Le dossier contient des informations techniques présentées postérieurement au dépôt de la demande et ne figurant pas dans le présent fascicule.

**Description**

La présente invention concerne un procédé destiné à la séparation d'un mélange de deux isomères optiques, au moyen d'un lit mobile simulé (LMS) utilisant une phase stationnaire chirale et un éluant achiral.

On sait qu'en chromatographie chirale on utilise des solides poreux avec lesquels on met en contact un mélange de deux isomères optiques dissous dans un fluide, ou un mélange de fluides, qui possèdent différentes propriétés d'adsorption à l'égard de chacun des isomères optiques. Ces solides poreux sont dénommés phases stationnaires chirales ou PSC.

La plupart du temps, les procédés de chromatographie chirale mettent en oeuvre une colonne simple, remplie de phase stationnaire chirale, qui est parcourue par un fluide, dénommé éluant. A des intervalles de temps réguliers, on injecte dans le courant d'éluant le mélange des isomères optiques à séparer qui est dissous dans un fluide approprié, qui peut être notamment constitué de l'éluant lui-même. Le mélange d'isomères optiques est ainsi entraîné dans la colonne et, de façon connue, on récupère, en sortie de celle-ci, l'isomère optique le moins adsorbé avant l'isomère optique le plus adsorbé.

On a également proposé pour assurer la séparation de deux isomères optiques de faire appel à une technique dite de "lit mobile simulé". Le lit mobile simulé est un vieux concept qui a été utilisé depuis les années 1960 pour la séparation à grande échelle des isomères du xylène, des n-alcanes, des iso-alcanes ou du fructose et du glucose. Depuis 1990, il a été utilisé dans le domaine de la chimie fine, et spécialement pour la séparation des isomères optiques. En ce qui concerne cette dernière catégorie de produits, le lit mobile simulé est décrit comme étant un procédé efficace pour obtenir simultanément deux isomères optiques très purs. On a ainsi obtenu des puretés pouvant aller au-delà de 99,5%. Cette technique a notamment été décrite dans les brevets : US-A-2.985.589, US-A-4.402.832, US-A-4.498.991 et US-A-5.126.055.

On sait qu'un lit mobile simulé est constitué d'un nombre donné de colonnes contenant une phase stationnaire qui sont reliées entre elles en série. Une solution, constituée du mélange des composés à séparer dissous dans un fluide approprié, dite charge, et un éluant, sont injectés de façon continue à l'entrée de deux colonnes différentes. Au niveau d'une colonne située en aval de la colonne où est injectée la charge, on recueille un flux, dit raffinat, qui contient l'énantiomère le moins retenu dans l'éluant et, en amont de la colonne où est injectée la charge, on recueille un flux, dit extrait, qui contient l'énantiomère le plus retenu dans l'éluant. On définit ainsi plusieurs zones de travail comprenant chacune un point d'injection et un point de soutirage.

Les points d'injection et de soutirage sont décalés à des intervalles de temps réguliers dans la direction de l'écoulement. L'intervalle de temps se situant entre deux décalages des points d'injection/soutirage est appelé la période.

Principalement, deux configurations de lit mobile simulé ont été décrites : un lit mobile simulé à quatre zones et un lit mobile simulé àtrois zones (C.f. Ruthven et Ching 1989 "Chemical Engineering Science"; 44 (1989),1011-1038)

Un inconvénient majeur de ce type de technique est que, au-delà d'une productivité donnée, dite productivité maximale de l'installation, toute augmentation de la quantité de charge se fait au détriment de la pureté des produits obtenus, ce qui limite le développement des techniques de ce type.

Le document EP-A-0 471082 décrit un procédé de séparation d'un mélange de deux isomères optiques dans un lit mobile simulé, rempli d'un remplissage avec résolution optique, constitué d'un ensemble de colonnes disposées en série, qui sont réparties en quatre zones, à savoir une zone d'adsorption, une zone de concentration, une zone de désorption et une zone de récupération de l'éluant. On injecte le mélange à l'entrée de la zone d'adsorption, à la sortie de laquelle on soutire le raffinat. On injecte l'éluant à l'entrée de la zone de désorption, à la sortie de laquelle on soutire l'extrait.

Le document WO-A-9108815 décrit un procédé de séparation d'un mélange dans un lit mobile simulé constitué d'un ensemble de lits en série, qui sont répartis en plusieurs zones (quatre dans l'exemple). L'injection d'un éluant permet de séparer un raffinat et un extrait du mélange alimenté. Les débits entrant et sortant du procédé sont variés pendant la mise en oeuvre du procédé.

Le document US-A-4498991 décrit un procédé de séparation d'un mélange dans un lit mobile simulé, constitué d'un ensemble de colonnes disposées en série, qui sont réparties en quatre zones, à savoir une zone d'adsorption, une zone de concentration, une zone de désorption et une zone de récupération de l'éluant. On injecte le mélange à l'entrée de la zone d'adsorption, à la sortie de laquelle on soutire le raffinat. On injecte l'éluant à l'entrée de la zone de désorption, à la sortie de laquelle on soutire l'extrait. Plusieurs exemples sont présentés quant aux débits d'alimentation, d'éluant, de raffinat et d'extrait.

La demanderesse a établi qu'il était possible de dépasser la productivité maximale obtenue dans les lits mobiles simulés fonctionnant suivant les procédés de l'état antérieur de la technique, tout en conservant la pureté de l'un ou l'autre des énantiomères séparés. Pour atteindre un tel résultat, la demanderesse a établi que des modifications appropriées des fonctions exercées au niveau des différentes zones du lit mobile simulé ainsi que des débits mis en oeuvre étaient nécessaires.

Les essais réalisés par la demanderesse ont ainsi conduit celle-ci à établir que, pour améliorer la productivité de l'installation, on devait bien entendu augmenter la quantité de charge mais que, pour obtenir des résultats Intéressants également sur le plan de la pureté des énantiomères séparés, cette augmentation devait être combinée avec une modification appropriée du débit de l'extrait.

La présente invention a ainsi pour but de proposer un procédé de séparation d'isomères optiques qui permet d'améliorer le rendement des procédés suivant l'état antérieur de la technique, tout en conservant La pureté de l'un des isomères obtenus, voire même en augmentant cette dernière.

L' invention a pour objet un procédé de séparation d'un mélange de deux isomères optiques aptes à être plus ou moins retenus dans une phase stationnaire chirale, ce procédé étant du type mettant en oeuvre un lit mobile simulé, constitué d'un ensemble de colonnes (C1,C2,C3,C4,C5,C6,C7,C8) disposées en série, remplies d'une phase stationnaire chirale, qui sont réparties en au moins trois zones successives (I,II,III), à savoir une première zone (I) à l'entrée de laquelle on injecte un éluant et en sortie de laquelle on soutire un flux, dit flux d'extrait, contenant principalement l'énantiomère le plus retenu, une seconde zone (II) en sortie de laquelle on injecte ledit mélange, et une troisième zone (III) en sortie de laquelle on soutire un flux, dit flux de raffinat, contenant principalement l'énantiomère le moins retenu, caractérisé en ce que : par rapport à un état de référence dans lequel : a) l'isomère optique le plus retenu dans la phase stationnaire est complètement désorbé dans la première zone (I) et est complètement adsorbé dans la troisième zone (III) et où l'isomère optique le moins retenu dans la phase stationnaire est complètement désorbé dans la seconde zone (II), et b)la quantité de charge est maximale,

- la quantité de charge injectée est supérieure à celle de l' état de référence, en jouant sur le débit volumique de la charge,
- le débit d' extrait est supérieur à celui de l'état de référence si l'on souhaite au moins maintenir la pureté de l'énantiomère le moins retenu, ou le débit d'extrait est inférieur à celui de l'état de référence si l'on souhaite au moins maintenir la pureté de l'énantiomère le plus retenu.

De façon préférentielle, et ainsi qu'exposé dans le mode de mise en oeuvre décrit ci-après, le lit mobile simulé comprend quatre zones, la quatrième zone étant située en aval du point de soutirage de raffinat et, dans l'état de référence, l'isomère optique le moins retenu dans la phase stationnaire est complètement adsorbé dans cette quatrième zone. La sortie de la dernière zone est éventuellement reliée à l'entrée de la première zone.

Par ailleurs, il a été établi, qu'en première approximation, le facteur d'augmentation de quantite de charge, c'est-à-dire le rapport de la quantité de charge injectée suivant l'invention sur la quantité de charge injectée dans l'état de référence, pour des intervalles étroits de ce facteur, et le facteur de correction de débit d'extrait, c'est-à-dire le rapport du débit d'extrait sur le rapport du débit d'extrait dans l'état de référence, sont liés par une relation mathématique sensiblement lineaire. On remarque que, dans ces conditions, la pente de la courbe représentant la variation du facteur de correction de débit d'extrait en fonction de la variation du facteur d'augmentation de quantité de charge varie en raison inverse de la valeur de la sélectivité de la phase stationnaire utilisée.

De façon plus précise il a été établi que le facteur d'augmentation de la quantité de charge et le facteur de correction de débit d'extrait sont liés par une relation linéaire exprimant le rapport du facteur d'augmentation de la quantité de charge sur le facteur de correction de débit d'extrait diminué d'une valeur de un, en fonction du facteur de correction de débit de charge diminué d'une valeur de un. Il a été également établi que le facteur de proportionnalité de ladite relation linéaire comprend la valeur de la sélectivité de la phase stationnaire utilisée. Plus précisément ledit facteur de proportionnalité est sensiblement égal au quart de la valeur de la sélectivité.

La présence invention s'applique à un système de lit mobile simulé constitué d'un nombre donné de colonnes disposées en série suivant des zones affectées de différentes fonctionnalités. Le mélange des isomères optiques que l'on souhaite séparer et un ou deux désorbants achiraux sont introduits de façon continue dans les colonnes contenant une phase stationnaire active optiquement. Deux courants contenant les isomères optiques enrichis sont extraits de façon continue à partir de la ligne des colonnes. La charge et le, ou les, désorbants sont injectés par des points d'injection qui sont décalés de façon périodique dans la direction du déplacement de l'éluant. Les deux flux d'isomères optiques enrichis sont récupères dans des points de récupération décalés ce façon périodique.

On décrira ci-après à titre d'exemple un mode de mise en oeuvre de la présente invention en regard du dessin annexé sur lequel :

La figure 1 est une vue schématique d'une série de colonnes constituant un lit mobile simule permettant de mettre en oeuvre le procédé suivant l'invention.

Les figures 2 à 5 sont des graphiques qui représentent la concentration en énantiomère le plus retenu (courbes a) et en énantiomères le moins retenu (courbes b) à l'entrée de chacune des colonnes qui constituent le lit mobile simulé, d'une part dans le cas d'un procédé suivant l'état antérieur de la technique (courbes en traits pointillés), dans le cas où l'on atteint le maximum de la productivité possible avec ce type de technique, et d'autre part suivant l'invention (courbes en traits pleins), dans le cas où l'on augmente la productivité de l'énantiomère le moins retenu.

La figure 6 est un graphique qui représente la variation du facteur de correction de débit d'extrait en fonction du facteur d'augmentation de la quantité de charge, pour diverses valeurs de la sélectivité de la phase stationnaire.

La figure 7 est un graphique qui représente la variation du rapport du facteur d'augmentation de la quantité de charge sur le facteur de correction de débit d'extrait diminué d'une valeur de un, en fonction du facteur d'augmentation de la quantité de charge diminué d'une valeur de un, pour cinq valeurs de la sélectivité de la phase stationnaire.

La figure 8 est un graphique qui représente la variation de la pente de la fonction représentée sur la figure 7 en fonction de la sélectivité de la phase stationnaire.

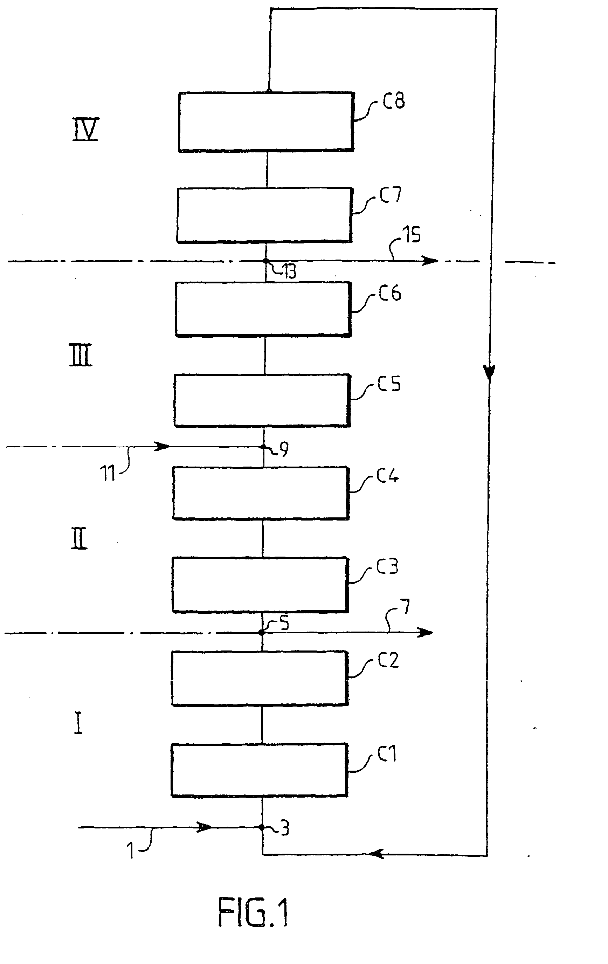

On a représenté à titre d'exemple sur la figure 1 une installation destinée à assurer la séparation de deux isomères optiques au moyen d'un dispositif à lit mobile simulé, qui est constitué en l'espèce d'une série de huit colonnes $C_1, C_2, ...., C_8$ qui sont réparties en quatre zones de deux colonnes I, II, III, IV, ces numérotations étant faites dans le sens de l'écoulement.

La zone I s'étend sur les deux premières colonnes $C_1$ et $C_2$ entre un point 3, où l'on injecte l'éluant par une conduite 1 et un point 5, où l'on soutire l'isomère optique le plus adsorbé, dans le flux d'extrait par une conduite 7.

La zone II s'étend sur les colonnes $C_3$ et $C_4$ à savoir entre le point de soutirage 5 et un point 9 où l'on injecte la charge, de façon continue, par une conduite 11, charge qui est constituée du mélange des isomères optiques que l'on souhaite séparer qui sont dissous dans un diluant, qui peut notamment être constitué de l'éluant injecté au point 3.

La zone III s'étend sur les colonnes C5 et C6, à savoir entre le point d'injection 9 de la charge et un point 13, où l'on soutire l'isomère optique le moins adsorbé, dans le flux du raffinat par une conduite 15.

La zone IV s'étend sur les colonnes C7 et C8, à savoir entre le point de soutirage 13 du raffinat et le point d'injection 3 de l'éluant. La sortie de la colonne C8 est reliée à l'entrée de la colonne C1.

Dans un fonctionnement de type classique, en lit mobile simulé pour une séparation chirale, les débits $Q_I$, $Q_{II}$, $Q_{III}$ et $Q_{IV}$ dans chacune des zones respectives I à IV sont choisis de la façon suivante :

- le débit $Q_I$ est tel que l'isomère optique le plus retenu est complètement désorbé dans la zone I,
- le débit $Q_{II}$ est tel que l'isomère optique le moins retenu est complètement désorbé dans la zone II,
- le débit $Q_{III}$ est tel que l'isomère optique le plus retenu est complètement adsorbé dans la zone III,
- le débit $Q_{IV}$ est tel que l'isomère optique le moins retenu est complètement adsorbé dans la zone IV

Les conditions précédentes conduisent à plusieurs états de fonctionnement possibles. Parmi ces différents états possibles, l'homme du métier sait déterminer celui qui conduit à la productivité La plus élevée. On dénommera par la suite cet état "état de référence".

On décrira ci-après quatre exemples de mise en oeuvre de l'invention :

## EXEMPLE 1

Dans un premier exemple de mise en oeuvre de l'invention, on se propose de séparer au moyen d'un tel lit mobile simulé, les énantiomères du (+/-)-5-[1,2,3,4-tétrahydro-6-chinolyl]-6-méthyl-3,6-dihydro-2H-1,3,4-thiadiazin-2-on qui est dissous dans un solvant constitué de méthanol à une concentration de 6g/l. On a souhaité, au cours de cette opération, recueillir l'énantiomère le moins retenu. On a utilisé pour ce faire une installation de lit mobile simulé du type décrit précédemment et qui comporte huit colonnes réparties en quatre zones de travail I, II, III, IV, ainsi que mentionné précédemment.

La phase stationnaire était une phase chirale du typetri (p-méthyl) benzoate de cellulose dont la granulométrie était de 20 à 45 micromètres. Le diamètre de chaque colonne était de 26 mm et sa longueur de 10 cm. L'éluant injecté au point 3 était du méthanol. La température du traitement était de 25°C.

Le point de départ, ou état de référence, était déterminé par les conditions suivant l'état antérieur de la technique dans lesquelles on obtient un maximum de productivité. Dans cet état de référence, le débit de la charge injectée au point 9 était de 6,2 ml/min, le débit d'extrait soutiré au point 5 était de 24,1 ml/min, le débit de raffinat soutiré au point 13 était de 6,1 ml/min, le débit d'éluant injecté au point 3 était de 24 ml/min, le débit $Q_1$ était de 44,9 ml/min et la période était de 14,6 min.

La pureté de l'énantiomère le moins retenu qui a été soutiré au point 13, dans le raffinat, était de 99,2% (3g/l) et la pureté de l'énantiomère le plus retenu qui a été soutiré au point 5, dans l'extrait, était de 98,2%. La productivité était de 18,5 mg/min d'énantiomère le moins retenu.

Suivant l'invention, on a augmenté la quantité de charge injectée au point 9 pour la porter à une valeur de 9,3ml/min, soit un facteur d'augmentation de la quantité de charge $\gamma$ de 1,5, qui a été obtenu en augmentant le débit de la charge, et l'on a augmenté corrélativement le débit d'extrait d'un facteur de 1,2, dénommé ci-après facteur de correction de débit d'extrait $\beta$. On a mesuré la pureté et la productivité de l'ériantiomère recherche dans le cas present, à savoir l'énantiomère le moins retenu. On a ainsi constaté que l'on obtenait 23,2 mg/min de cet énantiomère avec une pureté de 99,5%.

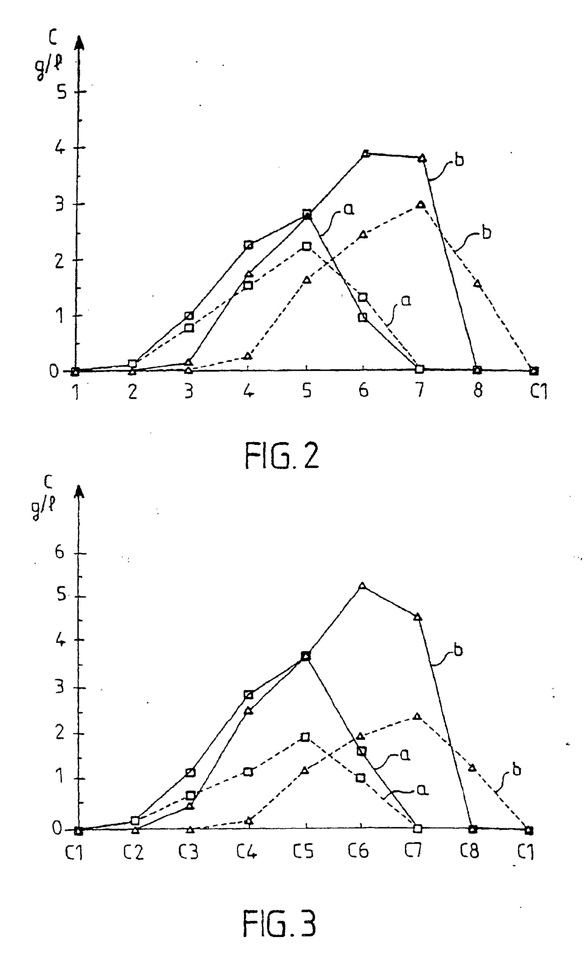

On a représenté sur la figure 2 les courbes de variation de la concentration C en énantiomère le plus retenu (courbe a) et en énantiomère le moins retenu (courbe b) dans des dispositifs de lits mobiles simulés respectivement suivant l'état antérieur de la technique (courbes en traits pointillés) et suivant l'invention (courbes en traits pleins), au niveau de l'entrée de chacune des huit colonnes C1 à C8 du dispositif.

On constate ainsi sur la figure 2 qu'en entrée de la colonne C7, la concentration en énantiomère le plus retenu est quasiment nulle, confirmant ainsi la grande pureté obtenue pour l'énantiomère le moins retenu. On notera également qu'à l'entrée de la colonne C3, c'est-à-dire au point de soutirage de l'extrait (énantiomère le plus retenu) la composition en énantiomère le moins retenu suivant l'invention (courbes en traits pleins) n'est pas nulle comme dans l'état antérieur de la technique (courbes en traits pointillés), ce qui explique la pureté réduite de l'énantiomère le plus retenu.

### EXEMPLE II

On décrira ci-après un second exemple de mise en oeuvre de l'invention dans lequel on se propose de separer un racémique, à savoir du binaphtol, qui est dissous dans un solvant, qui est l'éluant utilisé dans le procédé, et qui est constitué d'un mélange équivolumique d'heptane et d'isopropanol, la concentration de la charge ainsi constituée étant de 8 g/l.

Au cours de cette opération, on souhaite recueillir l'énantiomère le moins retenu. Le procédé a été mis en oeuvre dans un lit mobile simule identique a celui décrit précédemment.

Conditions de mise en oeuvre :

| Racémique | Binaphtol |
|---|---|
| Sélectivité | 1,45 |
| Diluant | Mélange équivolumique d'heptane et d'isopropanol |
| Concentration du racémique | 8 g/l |
| Nature de l'éluant | Mélange équivolumique d'heptane et d'isopropanol |
| Température du traitement | 20°C |
| Phase stationnaire | tri (3,5 diméthylphényl carbamate) d'amylose commercialisée sous la marque "CHIRALPAK AD" |
| Enantiomère recherché | Celui le moins retenu |

Etat de référence :

| Débit de la charge injectée au point 9 | 3,4 ml/min |
|---|---|
| Débit d'extrait soutiré au point 5 | 19,7 ml/min |
| Débit de raffinat soutiré au point 13 | 5,4 ml/min |
| Débit de l'éluant injecté au point 3 | 21,7 ml/min |
| Débit dans la zone 1 | 70 ml/min |
| Période | 1,6 min |
| Composition du flux de raffinat soutiré au point 13 | 98,6% de l'énantiomère le moins retenu |
| Productivité de l'énantiomère le moins retenu | 13,3 mg/min |

Suivant l'invention, on a multiplié la quantité de charge introduite au point 9 par un facteur d'augmentation de quantité de charge $\gamma$ égal à 3 et l'on a également augmenté la quantité d'extrait soutirée au point 5.

Les autres conditions de fonctionnement, à savoir la température de traitement, le débit du raffinat soutiré au point 13, ont été maintenues inchangées.

On a constaté que dans les conditions de l'invention pour faire fonctionner le lit mobile simulé avec un rendement optimal, ainsi que sait le faire l'homme du métier, la quantité d'extrait injectée devait alors être multipliée par un facteur de correction de débit d'extrait β, égal à 1,75.

Dans ces conditions, on a obtenu une productivité de l'énantiomère le moins retenu de 25 mg/min avec une pureté de 99,5%.

On a représenté sur la figure 3 les courbes de variation de la concentration C en énantiomère le plus retenu (courbe a) et en énantiomère le moins retenu (courbe b) dans des dispositifs de lits mobiles simulés respectivement suivant l'état antérieur de la technique (courbes traits pointillés) et suivant l'invention (courbes en traits pleins), au niveau de l'entrée de chacune des huit colonnes C1 à C8 du dispositif.

On constate ainsi que la présente invention permet d'améliorer non seulement la productivité de l'un au choix des deux énantiomeres, mais également la pureté de celui-ci.

### **EXEMPLE III**

On décrira ci-apres un troisième exemple de mise en oeuvre de l'invention dans lequel on se propose d'effectuer la séparation d'un ester racémique.

Conditions de mise en oeuvre :

| Racémique | Ester racemique |
|---|---|
| Sélectivité | 1,3 |
| Diluant | n-heptane/isopropanol |
| Concentration du racémique | 3 g/l |
| Nature de l'éluant | n-heptane/sopropanol |
| Température du traitement | 25°C |
| Phase stationnaire | tri(p-méthyl benzoate) de cellulose |
| Enantiomère recherche | Celui le moins retenu |

Etat de référence :

| Débit de la charge injectée au point 9 | 4,3 ml/min |
|---|---|
| Débit d'extrait soutiré au point 5 | 15,1 ml/min |
| Débit de raffinat soutiré au point 13 | 5,6 ml/min |
| Débit de l'éluant injecté au point 3 | 16,4 ml/min |
| Débit dans la zone 1 | 50 ml/min |
| Période | 9,6 min |
| Composition du flux de raffinat soutiré au point 13 | 98,7% de l'énantiomère le moins retenu |
| Productivité de l'énantiomère le moins retenu | 6,3 mg/min |

Suivant l'invention, et comme précédemment, on a multiplié par un facteur d'augmentation de quantité de charge γ, égal à 1,3, la quantité de charge introduite au point 9 et l'on a également augmenté la quantité d'extrait soutirée au point 5.

Les autres conditions de fonctionnement, à savoir la température de traitement, le débit du raffinat soutiré au point 13, ont été maintenues inchangées.

On a constaté que dans les conditions de l'invention pour faire fonctionner le lit mobile simulé avec un rendement optimal, ainsi que sait le faire l'homme du métier, la quantité d'extrait injectée devait alors être multipliée par un facteur de correction de débit d'extrait β, égal à 1,20.

Dans ces conditions, on a obtenu une productivité de l'énantiomère le moins retenu de 8 mg/min avec une pureté de 98,9%, la pureté dans l'extrait de l'énantiomère le plus retenu étant de 95,1%.

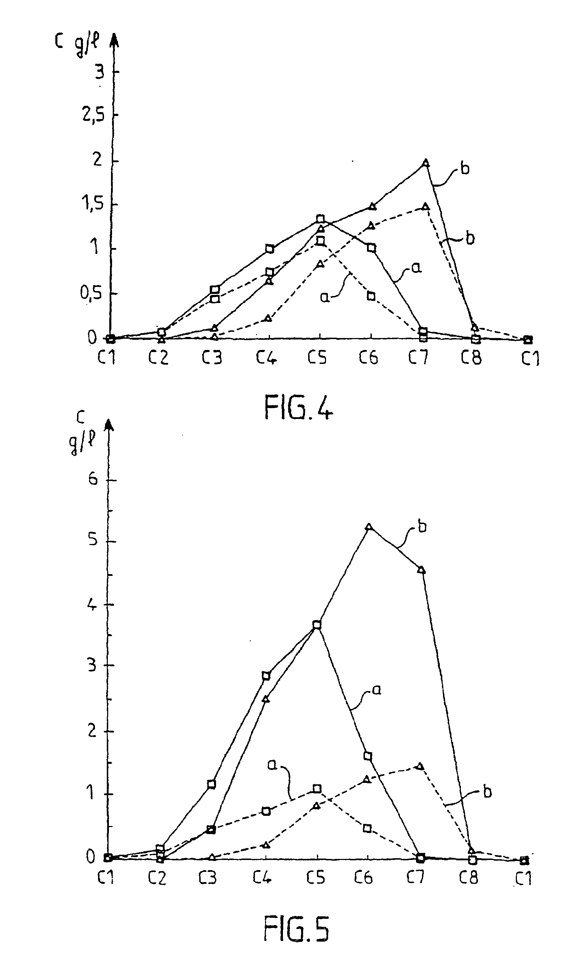

On a représenté sur la figure 4 Les courbes de variation de la concentration C en énantiomère le plus retenu (courbe a) et en énantiomère le moins retenu (courbe b) dans des dispositifs de lits mobiles simulés respectivement suivant l'état antérieur de la technique (courbes traits pointillés) et suivant l'invention (courbes en traits pleins), au niveau de l'entrée de chacune des huit colonnes C1 à C8 du dispositif.

## **EXEMPLE IV**

Dans un quatrième exemple de mise en oeuvre de l'invention on a, à partir du même énantiomère et du même état de référence que celui de l'exemple III, multiplié par un facteur d'augmentation de la quantité de charge γ égal à 2 la quantité de charge introduite au point 9, tous les autres paramètres de fonctionnement du procédé restant inchangés.

On a constaté que dans les conditions de l'invention pour faire fonctionner le lit mobile simulé avec un rendement optimal, ainsi que sait le faire l'homme du métier, la quantité d'extrait injectée devait alors être multipliée par un facteur de correction de débit d'extrait β, égal à 1,5.

On a obtenu une productivité de l'énantiomère le moins retenu égale à 10,3 mg/min avec une pureté de 99,1%.

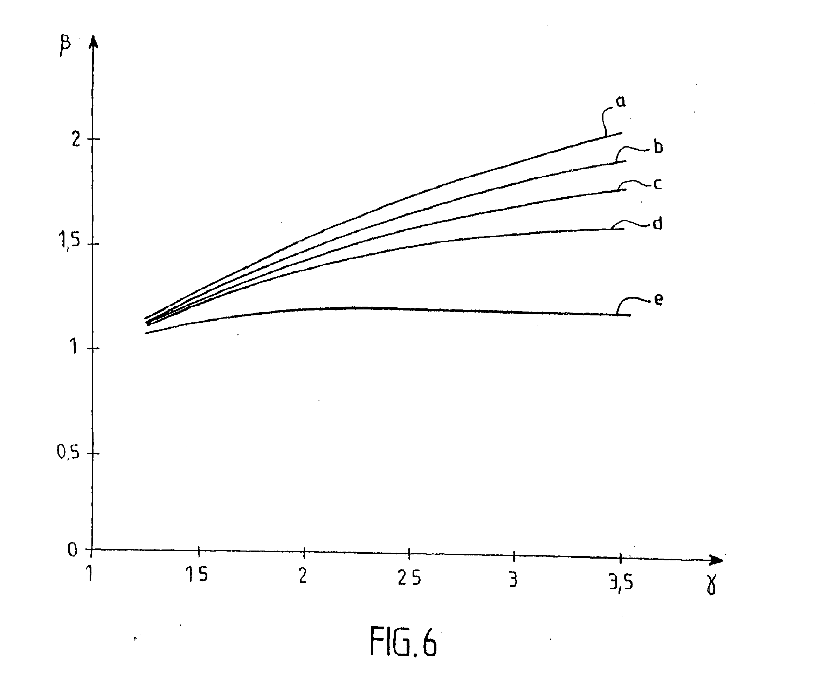

On a représenté sur la figure 5 les courbes de variation de la concentration C en énantiomère le plus retenu (courbe a) et en énantiomère le moins retenu (courbe b) dans des dispositifs de lits mobiles simulés respectivement suivant l'état antérieur de la technique (courbes traits pointilles) et suivant l'invention (courbes en traits pleins), au niveau de l'entrée de chacune des huit colonnes C1 à C8 du dispositif.

Toutes les expériences réalisées par la demanderesse lui ont permis de constater, dans le cadre de la présente invention, que le facteur de correction de débit d'extrait β dépendait de la sélectivité, c'est-à-dire d'un coefficient représentatif de l'affinité respective des deux énantiomères pour la phase stationnaire. On sait que la sélectivité α se définit de la façon suivante :

$$\alpha = \frac{t_2 - t_0}{t_1 - t_0}$$

où :

- $t_2$ est le temps de rétention de l'énantiomère le plus retenu
- $t_1$ est le temps de rétention de l'énantiomère le moins retenu
- $t_0$ est le temps mort de la colonne de chromatographie considérée, c'est-à-dire le temps de passage du fluide dans le volume mort de la colonne.

On a établi et on a représenté sur la figure 6 les courbes de variation du facteur de correction de débit d'extrait β en fonction du facteur d'augmentation de la quantité de charge γ pour diverses valeurs de la sélectivité α et notamment pour les valeurs des énantiomères étudiés, à savoir:

| Réf. Courbe | Enantiomère | Sélectivité |
|---|---|---|
| a | Méthyl 2-cyano-5-phényl pentanoata | 1,1 |
| b | Ester racémique | 1,3 |
| c | Binaphtol | 1,4 |
| d | (+/-)-5-[1,2,3,4-tétrahydro-6-chinolyl]-6-méthyl-3, 6-dihydro-2H-1,3,4-chiadiazin-2-on | 1,8 |
| e | Méthsuximide | 2,8 |

En première approximation, dans une fourchette relativement étroite, par exemple pour des facteurs d'augmentation de la quantité de charge γ compris entre 2 et 3, on peut considérer que les coefficients β et γ sont liés par une relation mathématique sensiblement linéaire. La pente des courbes β=f(γ) (représentées sur la figure 6) varie ainsi approximativement entre 0,38 pour une valeur de sélectivité α de 1,1 à 0 pour une valeur de sélectivité α de 2,8.

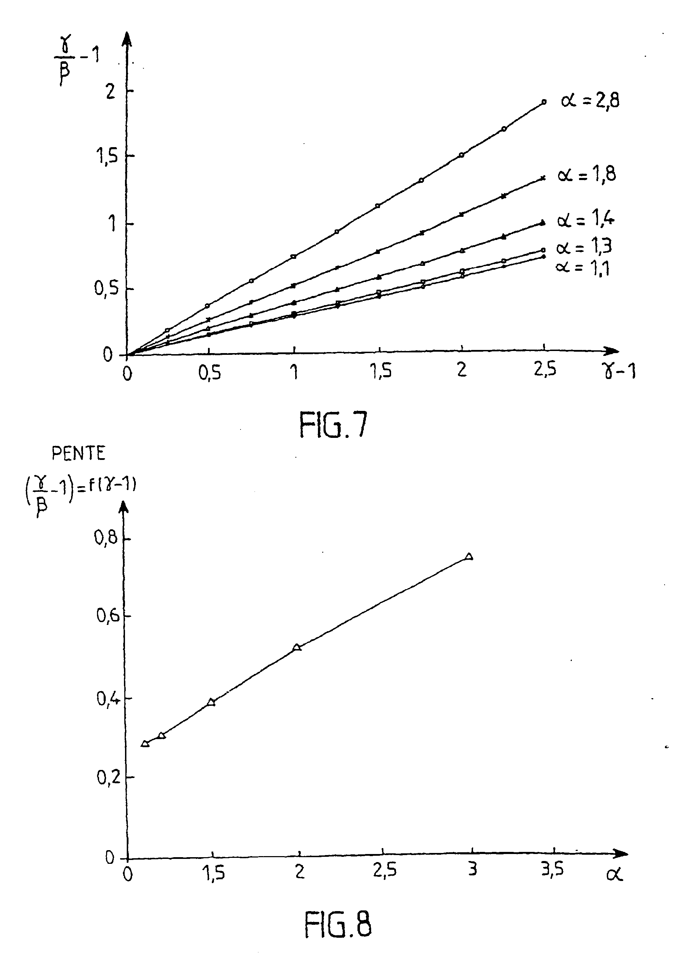

De façon plus précise la demanderesse, par les nombreux essais qu'elle a effectués a établi que la courbe (figure 7) représentant la variation du rapport du facteur d'augmentation de la quantité de charge γ sur le facteur de correction du débit d'extrait diminué d'une valeur de un (soit la valeur $\gamma/\beta$-1) en fonction du facteur d'augmentation de la quantité de charge $\gamma$ moins un (soit la valeur $\gamma$-1) était une droite. Il a également été établi que le pente de cette droite dépendait de la valeur de la sélectivité $\alpha$ de la phase stationnaire à l'égard des deux énantiomères considérés. Plus précisément il a été établi que cette pente (ainsi que représenté sur la figure 8) était sensiblement égale au quart de la sélectivité $\alpha$ de la phase stationnaire (soit la valeur 0,25 $\alpha$).

Suivant l'invention $\gamma$ et $\beta$ sont ainsi sensiblement liés par la formule:

$$(\gamma/\beta\text{-1})=0,25.\alpha(\gamma\text{-1}) \tag{1}$$

Le procédé suivant l'invention permet ainsi d'enrichir deux isomères optiques constitués d'un mélange de ces isomères avec une productivité très améliorée. Dans la plupart des procédés industriels de séparation chirale, un isomère optique doit être produit avec une pureté optique très élevée. Deux cas principaux d'application peuvent ainsi être définis :

- dans une première variante de mise en oeuvre l'isomère optique que l'on souhaite produire est enrichi à une pureté inférieure a celle requise. L'étape d'enrichissement suivant l'invention peut être suivie d'une étape de séparation supplémentaire telle qu'une cristallisation ou une résolution énantiosélective par lit mobile simulé avec une phase stationnaire chirale ou achirale, de façon que le traitement global, à savoir celui suivant l'invention, complété par un traitement ultérieur fournisse un résultat supérieur à celui d'un procédé en une étape tel qu'un lit mobile simulé avec une phase stationnaire chirale.
- dans une seconde variante l'isomère optique non souhaité est enrichi à une pureté inférieure à celle finalement requise.

La présente invention peut être suivie par une étape de traitement supplémentaire, telle qu'une racémisation, permettant de recycler un mélange d'isomères optiques dans le procédé suivant l'invention à partir de l'isomère optique enrichi et non désiré.

La présente invention peut bien entendu être également mise en oeuvre lorsque l'on souhaite augmenter la productivité et la pureté de l'énantiomère le plus retenu. Le mode opératoire serait alors le même que précédemment, à la différence que l'on diminuerait alors la quantité d'extrait, en divisant celle-ci par le facteur de correction de débit d'extrait $\beta$.

Bien que la presente invention ait été décrite en regard d'applications développées avec des dispositifs de lits mobiles simulés à quatre zones, l'homme du métier sera bien entendu en mesure d'appliquer l'enseignement de la présente invention à d'autres modèles de lits mobiles simulés tels que notamment des dispositifs à trois zones.

**Revendications**

1. Procédé de séparation d'un mélange de deux isomères optiques aptes à être plus ou moins retenus dans une phase stationnaire chirale, ce procédé étant du type mettant en oeuvre un lit mobile simulé, constitué d'un ensemble de colonnes (C1,C2,C3,C4,C5,C6,C7,C8) disposées en série, remplies d'une phase stationnaire chirale, qui sont réparties en au moins trois zones successives (I,II,III), à savoir une première zone (I) à l'entrée de laquelle on injecte un éluant et en sortie de laquelle on soutire un flux, dit flux d'extrait, contenant principalement l'énantiomère le plus retenu, une seconde zone (II) en sortie de laquelle on injecte ledit mélange, et une troisième zone (III) en sortie de laquelle on soutire un flux, dit flux de raffinat, contenant principalement l'énantiomère le moins retenu, **caractérisé en ce que** : par rapport à un état de référence dans lequel : a) l'isomère optique le plus retenu dans la phase stationnaire est complètement désorbé dans la première zone (I) et est complètement adsorbé dans la troisième zone (III) et où l'isomère optique le moins retenu dans la phase stationnaire est complètement désorbé dans la seconde zone (II), et b)la quantité de charge est maximale,

   - la quantité de charge injectée est supérieure à celle de l'état de référence, en jouant sur le débit volumique de la charge
   - le débit d'extrait est supérieur à celui de l'état de référence si l'on souhaite au moins maintenir la pureté de l'énantiomère le moins retenu, ou le débit d'extrait est inférieur à celui de l'état de référence si l'on souhaite au moins maintenir la pureté de l'énantiomère le plus retenu.

2. Procédé suivant revendication précédente **caractérisé en ce qu'**on utilise un lit mobile simulé comprenant quatre zones (I,II,III,IV), la quatrième zone (IV) étant située en aval du point de soutirage (13) de raffinat et, dans l'état de référence, l'isomère optique le moins retenu dans la phase stationnaire est complètement adsorbé dans cette quatrième zone (IV).

3. Procédé suivant l'une des revendications précédentes, **caractérisé en ce que** la sortie de la dernière zone est reliée à l'entrée de la première zone.

4. Procédé suivant l'une des revendications précédentes **caractérisé en ce que**, en première approximation, le facteur d'augmentation de quantité de charge ($\gamma$), c'est-à-dire le rapport de la quantité de charge injectée sur la quantité de charge dans l'état de référence, pour des intervalles étroits de ce facteur, et le facteur de correction de débit d'extrait ($\beta$), c'est-à-dire le rapport du débit d'extrait sur le rapport de débit d'extrait dans l'état de référence, sont liés par une relation mathématique sensiblement linéaire.

5. Procédé suivant la revendication 4 **caractérisé en ce que** la pente de la courbe représentant la variation du facteur de correction de débit d'extrait ($\beta$) en fonction de la variation du facteur d'augmentation de quantité de charge ($\gamma$) varie en raison inverse de la valeur de la sélectivité ($\alpha$) de la phase stationnaire utilisée.

6. Procédé suivant l'une des revendications 1 à 3, **caractérisé en ce que** le facteur d'augmentation de la quantité de charge ($\gamma$) et le facteur de correction de débit d'extrait ($\beta$) sont liés par une relation linéaire exprimant le rapport du facteur d'augmentation de la quantité de charge sur le facteur de correction de débit d'extrait ($\gamma/\beta$) diminué d'une valeur de un ($\gamma/\beta-1$), en fonction du facteur de correction de débit de charge ($\gamma$) diminué d'une valeur de un.

7. Procédé suivant la revendication 6 **caractérisé en ce que** le facteur de proportionnalité de ladite relation linéaire comprend la valeur de la sélectivité ($\alpha$) de la phase stationnaire utilisée.

8. Procédé suivant la revendication 7 **caractérisé en ce que** ledit facteur de proportionnalité est sensiblement égal au quart de la valeur de la sélectivité ($\alpha$).

9. Procédé suivant l'une des revendications 6 à 8 **caractérisé en ce que** le facteur d'augmentation de la quantité de charge ($\gamma$), le facteur de correction de débit d'extrait ($\beta$) et la sélectivité ($\alpha$) sont sensiblement liés par la relation :

$$(\gamma/\beta - 1) = 0,25.\alpha (\gamma - 1)$$

**Claims**

1. Method of separation of a mixture of two optical isomers adapted to be more or less immobilised in a chiral stationary phase, this method being of the type employing a simulated mobile bed, constituted by an assembly of columns (C1, C2, C3, C4, C5, C6, C7, C8) disposed in series, filled with a chiral stationary phase, which are divided into at least three successive zones (I, II, III), namely a first zone (I) at the inlet of which an eluent is injected and at the outlet of which a flux, called discharge flux, principally containing the more immobilised enantiomer, is drawn off, a second zone (II) at the inlet of which said mixture is injected, and a third zone (III) at the outlet of which a flux, called raffinate flux, principally containing the less immobilized enantiomer is drawn off, **characterized in that**, with respect to a reference state in which: a) the optical isomer more immobilised in the stationary phase is completely desorbed in the first zone (I) and is completely adsorbed in the third zone (III) and where the optical isomer less immobilised in the stationary phase is completely desorbed in the second zone (II), and b) the amount of charge is maximum,

   - the amount of charge injected is greater than that of the reference state by playing on the volume flow of the charge,
   - the discharge flow is greater than that of the reference state if it is desired at least to preserve the purity of the less immobilised enantiomer, or the discharge flow is less than that of the reference state if it is desired at least to preserve the purity of the more immobilised enantiomer.

2. Method according to the preceding Claim, **characterized in that** a simulated mobile bed comprising four zones (I, II, III, IV) is used, the fourth zone (IV) being located downstream of the drawing-off point (13) of raffinate and, in the reference state, the less immobilised optical isomer in the stationary phase is completely adsorbed in this fourth zone (IV).

3. Method according to one of the preceding Claims, **characterized in that** the outlet of the last zone is connected to the inlet of the first zone.

4. Method according to one of the preceding Claims, **characterized in that**, at first approximation, the factor of increase of amount of charge ($\gamma$), i.e. the ratio of the amount of charge injected with respect to the amount of charge injected in the reference state, for narrow intervals of this factor, and the factor of correction of discharge flow ($\beta$), i.e. the ratio of the discharge flow with respect to the ratio of the discharge flow in the reference state, are bound by a substantially linear mathematical relationship.

5. Method according to Claim 4, **characterized in that** the slope of the curve representing the variation of the factor of correction of the discharge flow ($\beta$) as a function of the variation of the factor of increase of amount of charge ($\gamma$) varies inversely with respect to the value of the selectivity ($\alpha$) of the stationary phase used.

6. Method according to one of Claims 1 to 3, **characterized in that** the factor of increase of the amount of charge ($\gamma$) and the factor of correction of discharge flow ($\beta$) are bound by a linear relationship expressing the ratio of the factor of increase of the amount of charge with respect to the factor of correction of discharge flow ($\gamma/\beta$) decreased by a value of one ($\gamma/\beta-1$), as a function of the correction factor of charge flow ($\gamma$) decreased by a value of one.

7. Method according to Claim 6, **characterized in that** the factor of proportionality of said linear relationship comprises the value of the selectivity ($\alpha$) of the stationary phase used.

8. Method according to Claim 7, **characterized in that** said factor of proportionality is substantially equal to a quarter of the value of the selectivity ($\alpha$).

9. Method according to one of Claims 6 to 8, **characterized in that** the factor of increase of the amount of charge ($\gamma$), the factor of correction of discharge flow ($\beta$) and the selectivity ($\alpha$) are substantially bound by the relationship:

$$(\gamma/\beta - 1) = 0.25. \ \alpha \ (\gamma - 1)$$

**Patentansprüche**

1. Verfahren zur Trennung einer Mischung von zwei optischen Isomeren, die sich dazu eignen, in einer chiralen stationären Phase mehr oder weniger zurückgehalten zu werden, wobei das Verfahren von einem Typ ist, bei dem ein simuliertes Fluid- bzw. Wanderbett angewandt wird, welches aus einem Aufbau von in Reihe angeordneten, mit einer chiralen stationären Phase gefüllten Kolonnen (C1, C2, C3, C4, C5, C6, C7, C8) zusammengesetzt ist, die in mindestens drei aufeinanderfolgende Zonen unterteilt sind, nämlich eine erste Zone (I), bei dessen Eingang ein Eluierungsmittel injiziert wird und bei dessen Ausgang ein Fluß abgezogen wird, Extraktfluß genannt, der hauptsächlich das mehr zurückgehaltene Enantiomer enthält, eine zweite Zone (II), bei dessen Ausgang die besagte Mischung injiziert wird, und eine dritte Zone (III), bei dessen Ausgang ein Fluß abgezogen wird, Raffinatfluß genannt, der hauptsächlich das weniger zurückgehaltene Enantiomer enthält, **dadurch gekennzeichnet, daß**, im Vergleich zu einem Refefenzzustand, bei dem a) das in der stationären Phase mehr zurückgehaltene optische Isomere in der ersten Zone (I) vollständig desorbiert wird und in der dritten Zone (III) vollständig adsorbiert wird und das in der stationären Phase weniger zurückgehaltene optische Isomere in der zweiten Zone (II) vollständig desorbiert wird, und b) die Beladungsmenge maximal ist,

   • die injizierte Beladungsmenge höher ist als die des Referenzzustands, indem der Volumendurchsatz der Beladung eingestellt wird,
   • die Extrakt-Durchflußmenge höher ist als die des Referenzzustands, wenn die Reinheit des weniger zurückgehaltenen Enantiomeren wenigstens aufrechterhalten werden soll, oder die Extrakt-Durchflußmenge geringer als die des Referenzzustands ist, wenn die Reinheit des mehr zurückgehaltenen Enantiomeren wenigstens aufrechterhalten werden soll.

2. Verfahren gemäß dem vorangehenden Anspruch, **dadurch gekennzeichnet, daß** ein simuliertes Fluid- bzw. Wanderbett verwendet wird, welches vier Zonen (I, II, III, IV) enthält, wobei die vierte Zone (IV) sich stromabwärts vom Punkt des Abzugs (13) des Raffinats befindet, und daß im Referenzzustand das optische Isomere, welches in der stationären Phase weniger zurückgehalten wird, in dieser vierten Zone (IV) vollständig adsorbiert wird.

3. Verfahren gemäß einem der vorangehenden Ansprüche, **dadurch gekennzeichnet, daß** der Ausgang der letzten Zone zu dem Eingang der ersten Zone zurückgeführt wird.

4. Verfahren gemäß einem der vorangehenden Ansprüche, **dadurch gekennzeichnet, daß** in einer ersten Annäherung der Anstiegsfaktor der Beladungsmenge ($\gamma$), das heißt, das Verhältnis der injizierten Beladungsmengezu der Beladungsmenge im Referenzzustand, für enge Intervalle dieses Faktors, und der Korrekturfaktor der Extrakt-Durchflußmenge ($\beta$), das heißt, das Verhältnis der Extrakt-Durchflußmenge zu der Extrakt-Durchflußmenge im Referenzzustand, in einer mathematisch im wesentlichen linearen Beziehung zueinander stehen.

5. Verfahren gemäß Anspruch 4, **dadurch gekennzeichnet, daß** die Neigung der gekrümmten Linie, die die Variation des Korrekturfaktors der Extrakt-Durchflußmenge ($\beta$) in Abhängigkeit von der Variation des Anstiegsfaktors der Beladungsmenge ($\gamma$) wiedergibt, in umgekehrtem Verhältnis variiert zu dem Wert der Selektivität ($\alpha$) der verwendeten stationären Phase.

6. Verfahren gemäß einem der Ansprüche 1 bis 3, **dadurch gekennzeichnet, daß** der Anstiegsfaktor der Beladungsmenge ($\gamma$) und der Korrekturfaktor der Extrakt-Durchflußmenge ($\beta$) in einer linearen Beziehung zueinander stehen, die das Verhältnis des Anstiegsfaktors der Beladungsmenge zu dem Korrekturfaktor der Extrakt-Durchflußmenge ($\gamma/\beta$), vermindert um einen Wert von eins ($\gamma/\beta$-1), in Abhängigkeit vom Korrekturfaktor der Beladungs-Durchflußmenge ($\gamma$), vermindert um den Wert eins, ausdrückt.

7. Verfahren gemäß Anspruch 6, **dadurch gekennzeichnet, daß** der Proportionalitätsfaktor der besagten linearen Beziehung den Wert der Selektivität ($\alpha$) der verwendeten stationären Phase einschließt.

8. Verfahren gemäß Anspruch 7, **dadurch gekennzeichnet, daß** der besagte Proportionalitätsfaktor im wesentlichen gleich einem Viertel des Werts der Selektivität ($\alpha$) ist.

9. Verfahren gemäß einem der Ansprüche 6 bis 8, **dadurch gekennzeichnet, daß** der Anstiegsfaktor der Beladungsmenge ($\gamma$), der Korrekturfaktor der Extrakt-Durchflußmenge ($\beta$) und die Selektivität ($\alpha$) im wesentlichen durch die Beziehung in Verbindung stehen:

$$(\gamma/\beta - 1) = 0,25 \cdot \alpha(\gamma-1)$$

FIG.1

FIG.2

FIG.3

13

FIG.4

FIG.5

14

FIG.6

EP 1 064 065 B2

FIG.7

FIG.8